(19)

Europäisches
Patentamt
European
Patent Office
Office européen
des brevets

(11) **EP 2 868 205 A1**

(12) **EUROPEAN PATENT APPLICATION**
published in accordance with Art. 153(4) EPC

(43) Date of publication:
**06.05.2015  Bulletin 2015/19**

(21) Application number: **13813124.8**

(22) Date of filing: **02.07.2013**

(51) Int Cl.:
*A23K 1/18* (2006.01)          *A23K 1/00* (2006.01)
*A23K 1/16* (2006.01)

(86) International application number:
**PCT/JP2013/068137**

(87) International publication number:
**WO 2014/007251 (09.01.2014 Gazette 2014/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:  **02.07.2012   JP 2012148932**

(71) Applicant: **Unicharm Corporation
Shikokuchuo-shi, Ehime 799-0111 (JP)**

(72) Inventors:
• **KANEHIRO Youko
Itami-shi
Hyogo 664-0831 (JP)**

• **IKEDA Go
Itami-shi
Hyogo 664-0831 (JP)**
• **KOBAYASHI Yosuke
Itami-shi
Hyogo 664-0831 (JP)**

(74) Representative: **Knights, Rupert
Saunders & Dolleymore LLP
9 Rickmansworth Road
Watford, Hertfordshire WD18 0JU (GB)**

(54)   **PET FOOD AND METHOD FOR MANUFACTURING PET FOOD**

(57)   There is provided pet food including animal raw ingredients and a wetting agent, a moisture content being in a range of 11% by weight to 18% by weight, and a mastication property represented by a product of hardness, cohesiveness, and elasticity being in a range of 14.7 N to 41.2 N.

EP 2 868 205 A1

## Description

Technical Field

The present invention relates to a pet food and a method of manufacturing pet food. More specifically, the present inventon relates to pet food in which biting characteristics (palatability) of a pet is improved due to excellent food texture with plumpish chewiness, and a method of manufacturing the pet food.

Priority is claimed on Japanese Patent Application No. 2012-148932, filed July 2, 2012, the content of which is incorporated herein by reference.

Background Art

A method of manufacturing pet food in which biting characteristics (palatability) of a pet is improved by granulating a pet food composition in which raw ingredients of well-balanced nutrition are mixed as a comprehensive nutritional diet of a pet, heating the granulated pet food composition so as to pregelatinize starch components and dry the pet food composition, and performing a fry treatment in oil at a temperature of 180°C or lower is disclosed (PTL 1).

Further, dry-type pet food whose palatability, digesting-absorbability, fluidity, and handleability are improved by micronizing fine particles constituting solid pet food and mixing small pieces of dried meat or the like having a specific size is disclosed (PTL 2).

Citation List

Patent Literature

[PTL 1] Japanese Unexamined Patent Application, First Publication No. S64-39953

[PTL 2] Japanese Patent No. 4471442

Summary of Invention

Technical Problem

As a method of manufacturing pet food in the related art, a technique of performing a fry treatment in oil for the purpose of improving biting characteristics of a pet is disclosed, but there is a problem in that the pet food becomes high in calories. In recent years, people have become health-conscious even for pet food, such that pet food which is good for health of a pet and has excellent biting characteristics of a pet has been demanded. Further, in order to please a pet cloyed with conventional pet food, a new elaborate pet food has been demanded.

The present invention has been made in consideration of the above-described problems, and an object thereof is to provide a pet food which has excellent biting characteristics of a pet and is conventionally unknown, and a method of manufacturing the pet food.

Solution to Problem

A first aspect of the present invention is a pet food. A second aspect of the present invention is a method of manufacturing pet food as described below.

(1) Pet food including: animal animal raw ingredients and a wetting agent, a moisture content being in a range of 11% by weight to 18% by weight, and a mastication property represented by a product of hardness, cohesiveness, and elasticity being in a range of 14.7 N to 41.2 N.
(2) The pet food according to (1), in which the pet food is shearable at a shearing force of 17.6 N to 63.7 N.
(3) The pet food according to (1) or (2), which is in the form of a pellet having a short diameter and a long diameter respectively in a range of 3 mm to 25 mm, and a thickness of 3 mm to 20 mm.
(4) The pet food according to any one of (1) to (3), which is for a small-sized dog having a weight of 1 kg to 14 kg.
(5) The pet food according to any one of (1) to (4), in which at least a portion thereof has a porous structure.
(6) The pet food according to any one of (1) to (5), in which a water activity thereof is in a range of 0.5 aw to 0.8 aw.
(7) The pet food according to any one of (1) to (6), in which the wetting agent is at least one of propylene glycol and glycerin.

(8) The pet food according to (7), in which the content of propylene glycol is in a range of 0.01% by weight to 6.0% by weight.

(9) The pet food according to (7), in which the content of glycerol is in a range of 0.01% by weight to 3.5% by weight.

(10) A method of manufacturing pet food, including: heating and granulating a mixture of animal animal raw ingredients and a wetting agent; and drying the granulated mixture.

(11) The method according to (10), in which a hot air at a temperature of 30°C to 150°C is blown on food grains obtained by heating and granulating the mixture, so as to dry the food grains.

(12) The method according to (10) or (11), further including coating food grains obtained after the drying with a coating agent containing fat.

Advantageous Effects of Invention

Pet food of the present invention has a new food texture with "plumpish" and suitable chewiness conventionally unknown. Due to this new food texture, even a pet cloyed with conventional pet food happily eats the pet food of the present invention because his or her appetite and curiosity are stimulated.

Brief Description of Drawings

FIG. 1 is an example of a mastication waveform obtained by measuring pet food using a physical property measuring device.

FIG. 2 illustrates a front view (left) and a side view (right) illustrating a V type plunger which can be used when measuring a shearing force of pet food of the present embodiment.

FIG. 3 is a flow chart showing an example of a method of manufacturing pet food of the present embodiment.

Description of Embodiments

<Pet food>

Pet food of the present embodiment contains animal raw ingredients and a wetting agent, the moisture content thereof being in the range of 11% by weight to 18% by weight, and a mastication property represented by a product of hardness, cohesiveness, and elasticity which are measured by a method described below, being in the range of 14.7N to 41.2N.

By satisfying the above-described moisture content and the mastication property, the food texture of the pet food has plumpish softness and suitable chewiness.

Here, the term "plumpish softness" can be represented by the softness of, for example, bread or sponge. Further, the term "suitable chewiness" can be represented by chewiness harder than boiled crumbling vegetables with less elasticity than that of steak meat which is sinewy to a degree that the meat cannot be bitten by teeth.

In the present embodiment, the moisture content thereof is not particularly limited as long as the moisture content is in the range of 11% by weight to 18% by weight, but the moisture content is preferably in the range of 12% by weight to 17% by weight, more preferably in the range of 13% by weight to 16% by weight, and still more preferably in the range of 14% by weight to 15% by weight. The palatability of a pet for the pet food of the present embodiment can be improved by adjusting the moisture content to be in the above-described range.

In the present embodiment, a mastication property can be represented by a relationship of "mastication property = hardness x cohesiveness x elasticity." The mastication property defined in this manner means energy necessary when a pet chews pet food.

In the present embodiment, the mastication property is not particularly limited as long as the mastication property is in the range of 14.7 N to 41.2 N, but the mastication property is preferably in the range of 19.6 N to 39.2 N and more preferably in the range of 22.5 N to 32.0 N. When the mastication property is in the above-described range, it is possible to improve the palatability of a pet for the pet food of the present embodiment and to respond to health consciousness of pet owners.

In the present embodiment, the hardness, the cohesiveness, and the elasticity of the can be determined as numerical values read from the mastication waveform obtained by measurement using a physical property measuring device described below based on the following measurement conditions.

<Physical property measuring device>

Manufacturer: Takemoto Denki Co., Ltd.
Name of device: TEXTUROMETER (Type number: GTX-2)

<Measurement conditions>

Plunger: circular plate ("chromium with a diameter of 20 mm") whose contact surface in contact with the pet food is smooth and whose diameter thereof is 20 mm
platform: flat dish
clearance (maximum compression point): 2 mm
output: 1 V
BITE SPEED: LOW (6 times/min)
number of mastications: two times of mastications

<Measurement method>

One grain of pet food is put on the flat dish and a load is applied thereto by pressing the plunger from the topside thereof. At this time, the plunger is pressed until the thickness of the pet food becomes 2 mm (clearance).

<Reading numerical value from mastication waveform>

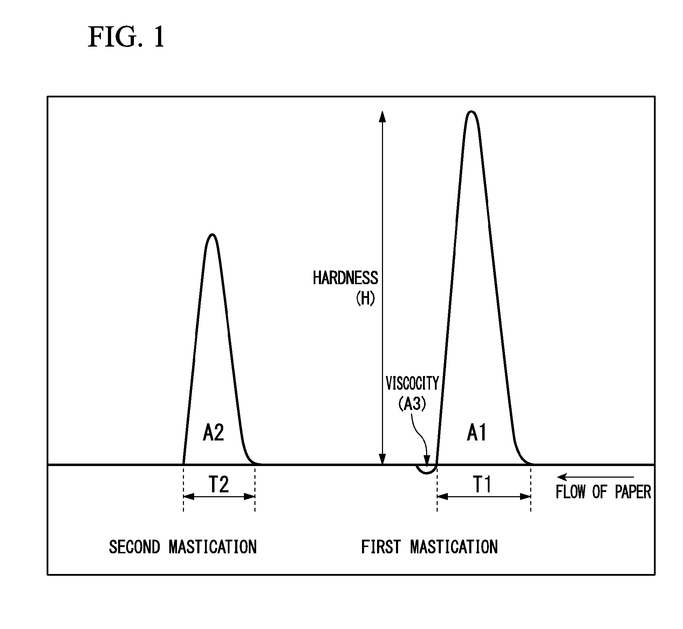

In the mastication waveform illustrated in FIG. 1, the hardness, the cohesiveness, and the elasticity are determined as follows.

Hardness (H): the maximum value in height of the waveform at the time of first mastication
Cohesiveness (A2/A1): {Area (A2) of the waveform at the time of second mastication/area (A1) of the waveform at the time of first mastication}
Elasticity (T2/T1): {Time (T2) at the time of second mastication/time (T1) at the time of first mastication}

$$\text{Mastication property} = \text{hardness} \times \text{cohesiveness} \times \text{elasticity}$$

In the mastication waveform illustrated in FIG. 1, it is considered that the reason why the relationship of "T1 > T2" is satisfied is that the pet food is crumbled and softened or the thickness thereof becomes small due to the first mastication.
The measured values in the mastication waveform illustrated in FIG. 1 indicate the following meanings.
The hardness (H) indicates a maximum testing force when a load is applied to the pet food using a plunger. The unit thereof is Newton (N). The hardness indicates physical hardness of the pet food.
The viscosity (A3) is represented by an area on the negative side (lower side of the horizontal axis) in the mastication waveform and indicates a force required for drawing back the plunger pressed on the pet food. The viscosity indicates a pulling and separating force after touching the pet food by hand or being attached to teeth, a tongue and/or an oral cavity by performing mastication. The unit thereof is Newton (N).
The cohesiveness (A2/A1) indicates a ratio of a second load area (energy) to a first load area when a load is continuously applied to the pet food two times. The cohesiveness indicates the cohesive force of the structure of the pet food or resistance to crumbling. There is no unit for the cohesiveness (dimensionless quantity).
The elasticity (T2/T1) indicates a ratio of time during which a load is applied to the pet food during mastication when a load is continuously applied to the pet food two times using the plunger. There is no unit for the elasticity (dimensionless quantity).
The mastication property is determined by a relationship of "hardness x cohesiveness x elasticity." The unit is Newton (N).
The gum property is determined by a relationship of "hardness/cohesiveness x 100." The unit is Newton (N).
In the present specification and claims, the units of numerical values of the hardness, the mastication property and the shearing force are converted to Newton (N) by multiplying the numerical value of the hardness (kgw) determined from the mastication waveform measured using a TEXTUROMETER (type number: GTX-2) above by 9.8.

In the present embodiment, the mastication property, the hardness, the cohesiveness and the elasticity of the present embodiment can be determined based on the mastication waveform obtained by performing measurement under the conditions which are the same as those of the above-described measurement conditions or conditions compatible with the above-described measurement conditions even when a measuring device other than the above-described physical property measuring device (TEXTUROMETER) is used.

In the present embodiment, the method of determining the mastication property, the hardness, the cohesiveness, and the elasticity of the present embodiment is in conformity with a food texture profile of Szczesniak (Szczesniak, A. S.: J. Food Sci., 28, 385 (1963)). The terms related to food texture are arranged and systematized by Szczesniak in General Foods, Inc. of America and show the correlation between values measured using the TEXTUROMETER and sensory evaluation values (Szczesniak, A. S., Blandt, M. A. & Freidman, H. H.: J. Food Sci., 28, 397 (1963)).

The range of the numerical value of the hardness, which is not particularly limited, is preferably 34 N to 74 N, more preferably 39 N to 68 N, and still more preferably 44 N to 58 N.

When the hardness is 34 N or higher, the energy required for the teeth of a pet to bite the pet food is increased, and the pet is allowed to feel the suitable hardness. As a result, the palatability of a pet for the pet food of the present embodiment can be improved.

When the hardness is 74 N or less, it becomes possible to prevent the energy required for the teeth of a pet to bite the pet food from being excess, and to allow the pet to feel the suitable hardness. As a result, the palatability of a pet for the pet food of the present embodiment can be improved.

The range of the numerical value of the cohesiveness, which is not particularly limited, is preferably 0.5 to 0.65, more preferably 0.52 to 0.62, and still more preferably 0.55 to 0.59.

When the cohesiveness is 0.5 or more, crumbling of the pet food is unlikely to occur and suitable chewiness can be obtained. As a result, the palatability of a pet for the pet food of the present embodiment can be improved.

When the cohesiveness is 0.65 or less, it becomes possible to prevent a pet from feeling uncomfortable due to the masticated pet food being adhered to the teeth of the pet. As a result, the palatability of a pet for the pet food of the present embodiment can be improved.

The range of the numerical value of the elasticity, which is not particularly limited, is preferably 0.85 to 0.95, more preferably 0.88 to 0.92, and still more preferably 0.89 to 0.90.

When the elasticity is 0.85 or more, the energy required to prevent the teeth of a pet from being pushed back to the outside of the pet food becomes increased after the pet bites into the pet food, and the pet is allowed to feel suitable chewiness. As a result, the palatability of a pet for the pet food of the present embodiment can be improved.

When the elasticity is 0.95 or less, it becomes possible to prevent the energy required for the teeth of a pet to bite the pet food from being excess and to allow the pet to feel the suitable chewiness. As a result, the palatability of a pet for the pet food of the present embodiment can be improved.

The pet food of the present embodiment can be fed to all kinds of pets including a dog and a cat, but the palatability of a dog for the pet food is improved. Accordingly, it is preferable that the pet food be fed to a dog and more preferable that the pet food be fed to a small-sized dog.

In the present specification and the aspects of the present embodiment, a "pet" means an animal bred by a person. In a narrower sense, a pet is an animal cared by the pet owner. Further, a "pet food" means feed for a pet. The pet food of the present embodiment can be manufactured and sold as "feed for animals" or "animal food."

Small-sized dogs whose weights are in the range of 1 kg to 14 kg such as a chihuahua, a toy poodle, and a miniature dachshund are particularly small and have delicate sensibility to the food texture. For this reason, the palatability of the above-described small-sized dogs to the pet food of the present embodiment tends to be improved compared to a case of a medium-sized dog or a large-sized dog.

Accordingly, in a case of improving the palatability of the small-sized dog to the pet food of the present embodiment, the moisture content thereof is preferably in the range of 12% by weight to 17% by weight, more preferably in the range of 13% by weight to 16% by weight, and still more preferably in the range of 14% by weight to 15% by weight.

Further, in a case of improving the palatability of the small-sized dog to the pet food of the present embodiment, the mastication property thereof is preferably in the range of 15 N to 40 N, more preferably in the range of 20 N to 40 N, and still more preferably in the range of 22 N to 32.0 N.

In a case of improving the palatability of the small-sized dog to the pet food of the present embodiment, the hardness thereof is preferably in the range of 34 N to 74 N, more preferably in the range of 39 N to 68 N, and still more preferably in the range of 44 N to 58 N.

In a case of improving the palatability of the small-sized dog to the pet food of the present embodiment, the cohesiveness thereof is preferably in the range of 0.5 to 0.65, more preferably in the range of 0.52 to 0.62, and still more preferably in the range of 0.55 to 0.59.

In a case of improving the palatability of the small-sized dog to the pet food of the present embodiment, the elasticity thereof is preferably in the range of 0.85 to 0.95, more preferably in the range of 0.88 to 0.92, and still more preferably in the range of 0.89 to 0.90.

In order to inform the pet owner that the pet food is suitable for the above-described small-sized dogs, when the pet food of the present embodiment is packaged and sold, it is possible to indicate that the pet food is suitable for the above-described small-sized dogs on the package to be sold.

The pet food of the present embodiment may have the above-described moisture content and mastication property and may also have a texture or porous strcture of bread or sponge. When the pet food has such texture or structure, an elastic texture of bread or sponge can be obtained.

The aforementioned texture or structure may be included in the inside of food grains or some food grains of the pet food. Meanwhile, the outer surface of the food grains may be harder than the inside thereof. When the outer surface of the food grains is harder than the inside thereof, the plumpy texture on the inside is further enhanced and the palatability can be further improved. As the food grains whose outer surface is harder than the inside thereof, food grains in which at least part of the outer surface is coated with a coating agent containing a fat that is solidified at room temperature (about 20°C) can be mentioned.

The numerical value of the shearing force necessary to shear the pet food of the present embodiment is not particularly limited, but it is preferable that the pet food of the present embodiment have the above-described moisture content and the mastication property. Further, the pet food is preferably shearable at a shearing force of 17.6 N to 63.7 N, more preferably shearable at a shearing force of 19.6 N to 39.2 N, and still more preferably shearable at a shearing force of 24.5 N to 34.3 N.

In the present embodiment, the shearing force is determined as a numerical value read from the mastication waveform obtained by performing measurement using the physical property measuring device under the measurement conditions described below.

<Physical property measuring device>

    Manufacturer: Takemoto Denki Co., Ltd.
    Name of device: TEXTUROMETER (Type number: GTX-2)

<Measurement conditions>

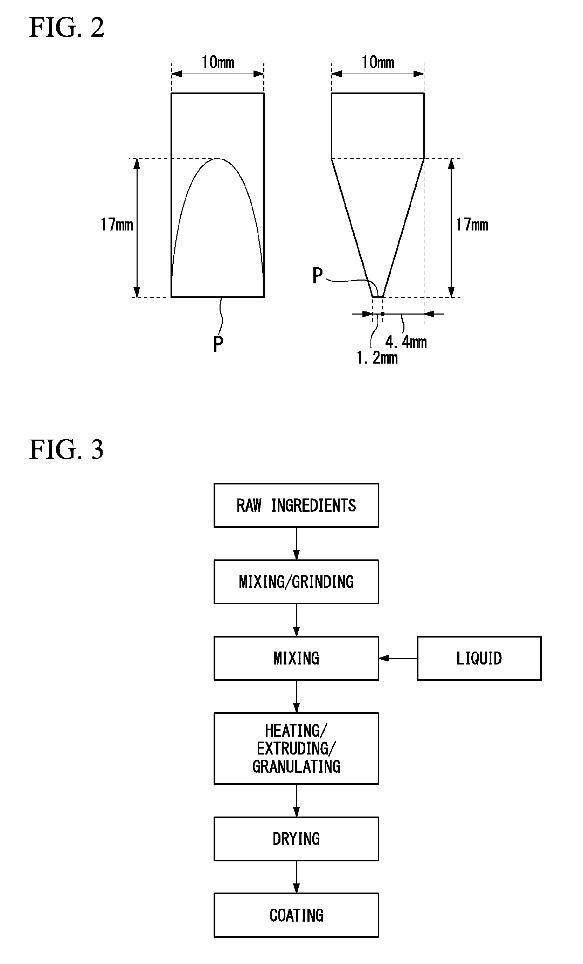

    Plunger: the plunger (chromium V type) illustrated in FIG. 2 whose contact surface P in contact with the pet food is a V type (wedge type)
    platform: flat dish
    clearance (maximum compression point): 2 mm
    output: 2 V
    BITE SPEED: LOW (mastications 6 times/min)

<Measurement method>

One grain of pet food is put on the flat dish and a load is applied thereto by pressing the contact surface P (tip end portion of a V type) of the plunger from the topside thereof. At this time, the plunger is pressed until the thickness of a recompression point of the pet food becomes 2 mm (clearance).

<Reading numerical value from mastication waveform>

In the obtained mastication waveform, the maximum value of the vertical axis is determined as the shearing force. The unit is N. Since the plunger is a V type, in a case where the shearing force (shearing stress) is measured, the shearing force is determined as a physical property different from the above-described hardness.

In the present embodiment, the shearing force (shearing stress) can be determined based on the mastication waveform obtained by performing measurement under the conditions which are the same as those of the above-described measurement conditions or conditions compatible with the above-described measurement conditions even when a measuring device other than the above-described physical property measuring device (TEXTUROMETER) is used.

Further, the method of determining the shearing force of the present embodiment is in conformity with the method described in the literature of the above-described by Szczeniak.

The shearing force is mainly caused by the hardness of the outer surface of the pet food grains. When the shearing force is in the above-described preferable range, the food texture closer to conventional dry food (moisture content of less than 10% by mass) can be obtained, and the food texture when the pet food is crushed with teeth is improved. As a result, the palatability of a pet for the pet food of the present embodiment can be further improved.

The water activity of the pet food of the present embodiment, which is not particularly limited, is preferably in the range of 0.5 aw to 0.8 aw, more preferably in the range of 0.58 aw to 0.7 aw, and still more preferably in the range of 0.63 aw to 0.68 aw. In general, a bacteriostatic action (an action of suppressing the growth of bacteria) can be obtained by reducing the water activity. Moreover, as a method of suppressing the growth of microorganisms, a method of adding propylene glycol having the bacteriostatic action or potassium sorbate having an antifungal action is known in addition to the method of minimizing the water activity.

The water activity of the pet food can be obtained by a known measurement method and, for example, can be measured using a water activity measuring device "Novasina IC-500 AW-LAB" (manufactured by DKSH Japan K.K.).

The shape of the pet food of the present embodiment is not particularly limited, and the pet food may have any shape as long as a pet eats the pet food having such shape. Examples thereof include a shape obtainable by molding into a pellet (grains), such as a spherical shape, a polygonal shape, a cylindrical shape, a donut shape, a plate shape or a circular tablet shape. The size of such a pellet is not particularly limited, but the short diameter and the long diameter are preferably in the range of 3 mm to 25 mm respectively and the thickness thereof is preferably in the range of 3 mm to 20 mm, the short diameter and the long diameter are more preferably in the range of 3 mm to 11 mm respectively and the thickness thereof is more preferably in the range of 3 mm to 9 mm, and the short diameter and the long diameter are still more preferably in the range of 5 mm to 9 mm respectively and the thickness thereof is still more preferably in the range of 5 mm to 8 mm. The above preferable size of the pet food is the size in which a pet can easily eat the pet food, and the palatability of the above-described small-sized dogs to the pet food of the present embodiment can be improved.

Animal raw ingredients used for conventional pet food can be applied to the animal raw ingredients contained in the pet food of the present embodiment. As the animal raw ingredients, meat derived from domestic animals such as cattle, pigs, and chickens, and various kinds of fish can be used. The animal raw ingredients contain protein components required by a pet.

The pet food of the present embodiment may include cereals containing a large amount of carbohydrate components or vegetable food materials containing a large amount of dietary fibers generally required by a pet in addition to the animal raw ingredients.

The wetting agent contained in the pet food of the present embodiment is not particularly limited as long as the wetting agent among conventional food additives has a function of suppressing or reducing evaporation of water (hygroscopicity) and holding water in a food material, and various wetting agents can be used. As the wetting agent, a tasteless, odorless, and colorless wetting agent is preferable, and examples thereof include polyhydric alcohol such as propylene glycol or glycerin. Further, saccharides such as sorbitol and trehalose may be used as the wetting agent. Further, in the present embodiment, glucose, fructose, sucrose, and dietary fibers do not fall under the definition of the wetting agent.

The wetting agent may be used alone or in combination of two or more kinds thereof.

In a case where the pet food of the present embodiment contains propylene glycol as the wetting agent, the content of the propylene glycol in the pet food is preferably in the range of 0.01% by weight to 6.0% by weight, more preferably in the range of 1.0% by weight to 6.0% by weight, and still more preferably in the range of 3.0% by weight to 5.5% by weight.

When the content of propylene glycol is 0.01 % by weight or more, the pet food can be maintained to be wet (a moisture-retaining property can be imparted to the pet food) and a bacteriostatic action of suppressing the growth of bacteria can be sufficiently obtained.

When the content of propylene glycol is 6.0% by weight or less, indigestion can be prevented.

In a case where the pet food of the present embodiment contains glycerol as the wetting agent, the content of the glycerol in the pet food is preferably in the range of 0.01% by weight to 3.5% by weight, more preferably in the range of 0.5% by weight to 3.5% by weight, still more preferably in the range of 1.0% by weight to 3.0% by weight.

When the content of glycerol is 0.01% by weight or more, the pet food is maintained to be wet (a moisture-retaining property can be imparted to the pet food), softness is provided for the pet food, and the water activity can be reduced.

When the content of glycerol is 3.5% by weight or less, indigestion can be prevented.

Further components contributing to maintaining health of a pet may be mixed with the pet food of the present embodiment. Examples of the mixing of the components include mixing glucosamine and chondroitin sulfate for maintaining health of the waist and joints of a pet; mixing milk calcium, vitamin D, glucosamine and chondroitin sulfate for maintaining health of bones, kneeps, and joints of a pet; and mixing glucosamine, chondroitin sulfate, and oligosaccharides for maintaining health of knees, joints and the stomach of a pet. Further, examples of the mixing include mixing vitamin E for maintaining immunity of a pet; mixing ingredients containing omega-6 fatty acid or omega-3 fatty acid for maintaining health of the skin or the hair gloss of a pet; and mixing food fibers for healthy excretion of a pet.

Examples of the ingredients containing omega-6 fatty acid or omega-3 fatty acid include vegetable oils derived from cereals; animal raw ingredients; animal oils and fats derived from animal raw ingredients; and fish oils derived from fish meal.

<Method of manufacturing pet food>

An example of a method of manufacturing the pet food of the present embodiment will be described with reference to the manufacturing flow illustrated in FIG. 3.

Raw ingredients separately ground by a grinder and a liquid are mixed using a pre-conditioner, warm water and steam are added thereto, and pre-cooked at a temperature of 90°C to 100°C. Propylene glycol and glycerin are contained in the liquid. Next, the mixture is sent to the inside of an extruder barrel by pre-cooking, and heating and granulating are performed at a temperature of 120°C to 135°C. A conventional extruder can be used during the heating and the granulating of the mixture. Starch components are pregelatinized by a first heating treatment (pre-cooking) at a temperature of 90°C to 100°C, such that the flavor is improved. A part of raw ingredients are expanded or vaporized by a second heating treatment at a temperature of 120°C to 135°C, such that voids are formed in the inside of the food grains, and food texture is improved.

Subsequently, the food grains are dried at a temperature of 80°C to 120°C until the moisture content in the food grains becomes in the range of 11 % by weight to 18% by weight and the mastication property becomes in the range of 14.7 N to 41.2 N, thereby obtaining the pet food of the present embodiment.

After the drying of the food grains, the pet food of the present embodiment may be coated with a coating agent containing seasonings or spices such as fat, animal extracts, and/or amino acids.

As the raw ingredients, raw ingredients generally used as complete nutritious food of a pet food can be used. As important nutrients contained in the raw ingredients, proteins and carbohydrates can be mentioned.

Examples of proteins include plant-derived proteins, animal-derived proteins, and a mixture of these. Specifically, examples of the plant-derived proteins include gluten, wheat protein, soy protein, rice protein, and corn protein. Examples of the animal-derived protein include proteins such as muscles and organs of cattle, pigs, fish and shellfish; protein of milk; and a mixture of these. Since these proteins may contain fats, vitamins, and iron, these can be used as nutrient sources.

Preferred examples of the carbohydrates include carbohydrates of cereals such as corn, wheat, barley, oat, rice, and soybeans. Since these cereals may contain proteins, the ash content, minerals, and vitamins in addition to carbohydrates, these can be used as nutrient sources.

As the raw ingredients, vitamins, minerals, salts, fats, and animal protein extract may be added to the mixture in addition to the proteins and the carbohydrates.

For example, the blending ratios (% by weight) for mixing raw ingredients listed in Table 1 can be exemplified.

[Table 1]

|  | Blending for cats | Blending for dogs |
|---|---|---|
| Cereals (corn, wheat, corn gluten meal, soybeans, and the like) | 55% to 75% | 65% to 85% |
| Meat (chicken meal, pork meal, (chicken extracts, and the like) | 10% to 25% | 7% to 20% |
| Seafood (fish meal, fish extracts, and the like) | 5% to 15% | 5% to 15% |
| Vitamins and minerals (vitamins for cats are different from vitamins for dogs) | 2% to 5% | 2% to 5% |
| Total | 100% | 100% |

A mixture obtainable by mixing the raw ingredients can be obtained by mixing the raw ingredients at a desired blending ratio. As a method of obtaining the mixture, a conventional method of grinding and mixing raw ingredients using a mixer or the like can be used.

The content of the wetting agent in the mixture with respect to solid ingredients such as animal raw ingredients are not particularly limited, and a composition in which 20 parts by weight to 50 parts by weight of the wetting agent is contained relative to 100 parts by weight of the solid ingredients can be exemplified. Here, examples of the solid ingredients include cereals, meat, seafood, vitamins, and minerals listed in Table 1. Alternatively, a composition in which 15% by weight to 35% by weight of the wetting agent is contained in the mixture obtained by mixing all ingredients containing animal fat can be exemplified. By preparing the mixture in this manner, the moisture content and the mastication property of the pet food of the present embodiment can be easily adjusted to the above-described numerical range.

Further, the moisture content in the mixture is not particularly limited, and the composition in which 10% by weight to 25% by weight of moisture is contained in the mixture can be exemplified. By preparing the above-described mixture in this manner, the moisture content and the mastication property of the pet food of the present embodiment can be easily adjusted to the in the above-described numerical range.

The method of granulating the mixture is not particularly limited as long as pet food can be molded into a shape which is suitable for a pet to eat, and an extruder can be preferably used. A conventional extruder capable of granulating a mixture of food to have a suitable size can be used. By using an extruder, the mixture can be pressed, so as to adjust the hardness of the obtained food grains.

The term "granulating" means molding pet food into a shape which is suitable for a pet to eat. In the present embodiment, the shape of food grains (pellet) to be molded is not particularly limited as long as the shape is suitable for a pet to eat and any kind of shape such as a spherical shape, a polygonal shape, a cylindrical shape, a donut shape, a plate shape or a circular tablet shape can be used. Further, in regard to the size of food grains to be molded, the food grains may be small enough for a pet to eat one grain in one bite, or may be large enough for a pet to bite into the food over a plurality of times.

The shape of food grains is not particularly limited, but food grains having a pellet shape in which the short diameter and the long diameter are respectively in the range of 3 mm to 25 mm and the thickness is in the range of 3 mm to 20 mm are preferable, food grains having a pellet shape in which the short diameter and the long diameter are respectively in the range of 3 mm to 11 mm and the thickness is in the range of 3 mm to 9 mm are more preferable, and food grains having a pellet shape in which the short diameter and the long diameter are respectively in the range of 5 mm to 9 mm and the thickness is in the range of 5 mm to 8 mm are still more preferable. When the food grains have such a shape, the mastication property can be easily adjusted to be a preferable range when the pet food is adjusted to have a predetermined moisture content in a subsequent heating treatment and a drying treatment.

Further, the shape of food grains may be a plate shape, a cylindrical shape, or a tube shape which is extremely large for a pet to eat the food in one bite.

Carbohydrates in the mixture can be pregelatinized by performing the heating treatment when the mixture is molded and granulated in the granulating process. Through pregelatinization, an effect of improving the flavor and food texture of food grains to be obtained can be achieved.

The heating treatment can be performed in two times. For example, a heating method of performing a heating process in two steps described below can be exemplified.

The temperature of a first heating treatment (pre-cooking) is not particularly limited, but the temperature is preferably 150°C or lower, more preferably in the range of 50°C to 120°C, and still more preferably in the range of 80°C to 100°C. In a case where the grains are heated at this temperature, the time for the heating treatment is preferably in the range of 1 minute to 20 minutes, more preferably in the range of 2 minutes to 20 minutes, and still more preferably in the range of 3 minutes to 6 minutes.

The temperature of a second heating treatment is not particularly limited, but a higher temperature than that of the first heating treatment is preferable. The temperature and the time of the heating conditions are, for example, in the range of 120°C to 150°C for preferably 1 minute to 20 minutes and for more preferably 0.5 minute to 10 minutes.

A device and a method used for the heating treatment are not particularly limited, but it is preferable that first heating be performed by adding warm water or steam to raw ingredients using a pre-conditioner. The second heating is preferably performed during extrusion of food grains using an extruder.

It is possible to add 4% by weight to 5% by weight of moisture to the mixture using the warm water or steam.

<Drying treatment>

As the method of drying the food grains obtained after the heating treatment is completed, which is not particularly limited, conventional methods such as a method of naturally drying food grains, a method of drying food grains by blowing warm air, a method of drying food grains by reducing the pressure, and a method of drying food grains by performing freeze-drying can be used. Among these drying methods, a method of drying food grains by blowing warm air is preferable in terms of improving the flavor of the pet food.

The temperature of food grains during the drying and the temperature of warm air to be blown to the food grains are not particularly limited, but the temperature of the warm air is preferably 150°C or lower, more preferably in the range of 90°C to 120°C, and still more preferably in the range of 100°C to 110°C. In the case where the food grains are dried at this temperature, the time of the heating treatment is preferably in the range of 1 minute to 120 minutes, more preferably in the range of 5 minutes to 60 minutes, and still more preferably in the range of 5 minutes to 15 minutes. The lower limit of the temperature of the warm air is not particularly limited, but the lower limit thereof is generally a temperature of exceeding room temperature (20°C) and preferably 30°C or higher.

When the temperature range and the time range are respectively at least as large as the lower limit, it is possible to dry the food grains in a relatively short period of time. When the temperature range is no more than the upper limit, it is possible to prevent the food grains from being excessively heated.

Further, the temperature of the heating temperature may be the same as or different from the temperature of the drying treatment.

The moisture content, the mastication property, the hardness, the cohesiveness, the elasticity, the shearing force, and the water activity of the food grains can be respectively adjusted to a predetermined value by performing the above-described drying treatment.

After drying of the food grains, the pet food of the present embodiment may be coated with a coating agent containing crude tallow, seasonings, or spices.

The coating method is not particularly limited, and the coating may be performed using a vacuum coating method.

The vacuum coating method is a method of reducing the pressure in a state where heated food grains are in contact with or adhered to the coating agent and then gradually opening the food grains and the coating agent to the atmosphere. The coating agent may be a liquid or powder. The palatability of a pet for the pet food can be improved by the coating process.

The pet food of the present embodiment satisfies the numerical values of the moisture content and the mastication property regardless of whether or not the coating is performed.

Examples

Next, the present invention will be described in detail with reference to Example, but the present invention is not limited to Example described below.

First, cereals, meat, seafood, vitamins, minerals, saccharides (sweeteners including sucrose, fructose, or glucose), water, and propylene glycol as a wetting agent were mixed together with blending ratios listed in Table 2, and glucosamine, chondroitin sulfate, fat and a flavor enhancer (seasonings or the like) were further mixed, thereby obtaining a mixture of raw ingredients.

[Table 2]

|  | Example (final moisture content = 15% by weight) | Comparative Example (final moisture content = 25% by weight) |
|---|---|---|
|  | Composition A (% by weight) | Composition B (% by weight) |
| Cereals | 50.94 | 48 |
| Meat | 15 | 16 |
| Seafood | 4 | 4 |
| Vitamins and minerals | 1 | 1 |
| Saccharides | 8 | 9 |
| Water | 10 | 10 |
| Propylene glycol | 4 | 5 |
| Glucosamine and chondroitin | 0.06 | - |
| Fat | 5 | 5 |
| Flavor enhancer | 2 | 2 |
| Total | 100 | 100 |

[Example 1]

The obtained mixture was subjected to a heating treatment using a pre-conditioner at a temperature of 90°C to 100°C for 3 minutes, followed by granulating using an extruder, so aso to obtain cylindrical food grains having a diameter of 5 mm and a height of 5 mm. During the granulating by extrusion, a heating treatment was applied at a temperature of 120°C to 135°C for 30 seconds. Next, the obtained food grains were dried at a temperature of about 100°C to 110°C for about 15 minutes using a dryer, thereby obtaining a pet food according to the present invention.

The obtained pet food was subjected to a coating treatment using a coating agent containing crude tallow, seasonings, and spices, and was used for an evaluation test of palatability described below.

With respect to the pet food of Example 1, the moisture content was 15% by weight, the mastication property was 22.76 N, the hardness was 44.1 N, the cohesiveness was 0.58, the elasticity was 0.89, the shearing force was 28.42 N and the water activity was 0.65 aw. The moisture content was measured using a method described below. Other measurement items were determined by the above-described measurement method.

[Comparative Example 1]

The obtained mixture was subjected to a heating treatmentat a temperature of 90°C to 100°C for 3 minutes using a pre-conditioner, followed by granulating using an extruder, so as to obtain cylindrical food grains having a diameter of 5 mm and a height of 5 mm. During the granulating, a heating treatment was applied at a temperature of 120°C to 135°C for 30 seconds. Next, the obtained food grains were cooled by blowing air, thereby obtaining pet food according to the present invention.

Pet food obtained by coating the obtained pet food with a coating agent containing crude tallow, seasonings, and spices was used for an evaluation test described below.

With respect to the pet food of Comparative Example 1, the moisture content was 25% by weight, the mastication property was 33.16 N, the hardness was 58.8 N, the cohesiveness was 0.6, the elasticity was 0.94, the shearing force was 39.2 N, and the water activity was 0.8 aw. The moisture content was measured using a method described below. Other measurement items were determined by the above-described measurement method.

<Measurement of moisture content>

The moisture content (% by weight) of the manufactured pet food was measured using a normal pressure heating and drying method described below.

«Normal pressure heating and drying method»

The weight (W1 gram) of an aluminum weighing can was measured in advance as a constant weight value. A sample was put into the aluminum weighing can and the weight (W2 gram) was weighed. Next, the sample was dried using a force circulation type warm air drier at 135°C for 2 hours. The sample was left to be cooled in a dry atmosphere (in a silica gel desiccator) and the weight (W3 gram) was weighed. The moisture content was determined from the obtained weights using the following equation.

$$\text{Moisture content (\%)} = [(W2 - W3)/(W2 - W1)] \times 100$$

<Evaluation of palatability>

In order to evaluate the palatability (biting characteristics) of a small-sized dog to the pet food of Example 1 and Comparative Example 1, the results of feeding pet food to pet dogs were collected from a total of 108 panels raising small-sized dogs.

Specifically, 53 panels (group A) were made to feed the pet food of Example 1 instead of a dry type pet food (moisture content: 10% or less) that was normally fed to their pets and 55 panels (group B) were made to feed the pet food of Comparative Example 1 instead of a dry type pet food (moisture content: 10% or less) that was normally fed to their pets.

Each panel of the group A and the group B normally feeding the same dry type pet food to their pets was asked about the evaluation items described below, and the replies were obtained.

When each panel of the A group was asked about biting characteristics (palatability) with respect to the pet food of Example 1, 37.7% of the panels answered "very good," 32.1 % of them answered "good," 18.9% of them answered "I cannot say either way," and 11.3% of them answered "I cannot say that the pet food is good."

When each panel of the B group was asked about biting characteristics (palatability) with respect to the pet food of Comparative Example 1, 25.5% of the panels answered "very good," 45.5% of them answered "good," 23.6% of them answered "I cannot say either way," and 5.5% of them answered "I cannot say that the pet food is good."

From these results, it is understood that the pet food of Example 1 with more panels answering that the biting characteristics were very good has the same as or more excellent biting characteristics than the pet food of Comparative Example 1.

<Group A: other evaluation items>

When each panel of group A was asked about how well the pet ate the pet food (whether the pet ate a large amount of pet food) with respect to the pet food of Example 1, 81% of the panels answered "good," 6% of them answered "I cannot say either way," and 13% of them answered "I cannot say that the pet ate well."
When each panel of group A was asked whether the pet food of Example 1 was eaten by their pets with ease, 76% of the panels answered "good," 15% of them answered II cannot say either way," and 9% of them answered "I cannot say that the pet ate with ease."
When each panel of group A was asked about softness of the grains of Example 1, 81% of the panels answered "good," 15% of them answered "I cannot say either way," and 4% of them answered "I cannot say that the grains were soft."
When each panel of group A was asked about chewiness of the pet food of Example 1, 62% of the panels answered "good," 30% of them answered "I cannot say either way," and 8% of them answered "I cannot say that the pet food was chewy."

<Group B: other evaluation items>

When each panel of group B was asked about how well the pet ate the pet food (whether the pet ate a large amount of pet food) with respect to the pet food of Comparative Example 1, 82% of the panels answered "good," 12% of them answered "I cannot say either way," and 6% of them answered "I cannot say that the pet ate well."
When each panel of Group B group was asked whether the pet food of Comparative Example 1 was eaten by their pets with ease, 82% of the panels answered "good," 12% of them answered "I cannot say either way," and 6% of them answered "I cannot say that the pet ate with erase."
When each panel of group B was asked about softness of grains of Comparative Example 1, 65% of the panels answered "good," 22% of them answered "I cannot say either way," and 13% of them answered "I cannot say that the grains were soft."
When each panel of Group B was asked about chewiness of the pet food of Comparative Example 1, 42% of the panels answered "good," 36% of them answered "I cannot say either way," and 22% of them answered "I cannot say that the pet food was chewy."
When Group A group was compared to group B in regard to other evaluation items, better evaluations were obtained on items "softness of grains" and "chewiness" of Example 1 than those of Comparative Example 1.
While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

**Claims**

1. Pet food comprising:

   animal raw ingredients; and
   a wetting agent,
   a moisture content being in a range of 11% by weight to 18% by weight, and
   a mastication property represented by a product of hardness, cohesiveness, and elasticity being in a range of 14.7 N to 41.2 N.

2. The pet food according to claim 1, wherein the pet food is shearable at a shearing force of 17.6 N to 63.7 N.

3. The pet food according to claim 1, which is in the form of a pellet having a short diameter and a long diameter in a range of 3 mm to 25 mm respectively, and a thickness of 3 mm to 20 mm.

4. The pet food according to claim 1, which is for a small-sized dog having a weight of 1 kg to 14 kg.

5. The pet food according to claim 1, wherein at least a portion thereof has a porous structure.

6. The pet food according to claim 1, wherein a water activity thereof is in a range of 0.5 aw to 0.8 aw.

7. The pet food according to claim 1, wherein the wetting agent is at least one of propylene glycol and glycerin.

8. The pet food according to claim 7, wherein the content of propylene glycol is in a range of 0.01% by weight to 6.0% by weight.

9. The pet food according to claim 7, wherein the content of glycerol is in a range of 0.01% by weight to 3.5% by weight.

10. A method of manufacturing pet food, comprising:

heating and granulating a mixture of animal raw ingredients and a wetting agent; and
drying the granulated mixture.

11. The method according to claim 10, wherein a hot air at a temperature of 30°C to 150°C is blown on food grains obtained by heating and granulating the mixture, so as to dry the food grains.

12. The method according to claim 10, further comprising coating food grains obtained after the drying with a coating agent containing fat.

FIG. 1

SECOND MASTICATION | FIRST MASTICATION

HARDNESS
(H)

VISCOCITY
(A3)

A2

A1

T2

T1

FLOW OF PAPER

FIG. 2

10mm

17mm

P

10mm

17mm

P

4. 4mm

1. 2mm

FIG. 3

RAW INGREDIENTS

↓

MIXING/GRINDING

↓

MIXING ← LIQUID

↓

HEATING/
EXTRUDING/
GRANULATING

↓

DRYING

↓

COATING

## INTERNATIONAL SEARCH REPORT

| International application No. |
| --- |
| PCT/JP2013/068137 |

A. CLASSIFICATION OF SUBJECT MATTER
*A23K1/18*(2006.01)i, *A23K1/00*(2006.01)i, *A23K1/16*(2006.01)i

According to International Patent Classification (IPC) or to both national classification and IPC

B. FIELDS SEARCHED

Minimum documentation searched (classification system followed by classification symbols)
A23K1/00-3/04

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 58-43750 A  (General Foods Corp.),<br>14 March 1983 (14.03.1983),<br>page 5, lower left column, line 6 to page 5,<br>lower right column, line 4; page 9, lower left<br>column, line 15 to page 9, lower right column,<br>line 6; page 10, upper right column, lines 6<br>to 20; page 11, upper left column, line 7 to<br>page 11, lower right column, line 8<br>& US 4391829 A | 10-12<br>1-9 |
| Y | JP 2001-8640 A  (Kyodo Shiryo Co., Ltd.),<br>16 January 2001 (16.01.2001),<br>paragraphs [0014] to [0015]<br>(Family: none) | 1-9 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    25 September, 2013 (25.09.13) | Date of mailing of the international search report<br>    08 October, 2013 (08.10.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2013/068137 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2010/146060 A1  (SPECIALITES PET FOOD),<br>23 December 2010 (23.12.2010),<br>entire text; all drawings<br>& JP 2012-529900 A        & US 2012/0093986 A1<br>& EP 2442670 A          & AU 2010261855 A<br>& CA 2764826 A          & CN 102458145 A<br>& MX 2011013855 A        & CO 6480911 A | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012148932 A
- JP S6439953 B
- JP 4471442 B

**Non-patent literature cited in the description**

- **SZCZESNIAK, A. S.** *J. Food Sci.,* 1963, vol. 28, 385
- **SZCZESNIAK, A. S. ; BLANDT, M. A. ; FREIDMAN, H. H.** *J. Food Sci.,* 1963, vol. 28, 397